# EUROPEAN PATENT SPECIFICATION

(11) **EP 3 487 100 B1**
(45) Date of publication and mention of the grant of the patent: **09.06.2021**
(21) Application number: 16911098.8
(22) Date of filing: 03.08.2016
(51) Int. Cl.: H04L 1/18, H04W 72/02, H04W 72/04

(54) **HARQ RESPONSE INFORMATION TRANSMISSION METHOD**
HARQ-ANTWORT-INFORMATIONSÜBERTRAGUNGSVERFAHREN
PROCÉDÉ DE TRANSMISSION D'INFORMATIONS DE RÉPONSE HARQ

(43) Date of publication of application: 22.05.2019
(73) Proprietor: Huawei Technologies Co., Ltd., Longgang District Shenzhen, Guangdong 518129 (CN)
(72) Inventor: LI, Xiaocui, Shenzhen Guangdong 518129 (CN); XU, Kai, Shenzhen Guangdong 518129 (CN); ZHANG, Lili, Shenzhen Guangdong 518129 (CN)
(74) Representative: Gill Jennings & Every LLP
(86) International application number: PCT/CN2016/093120
(87) International publication number: WO 2018/023501

(56) References cited:
- CN-A- 103 368 715
- CN-A- 104 901 775
- CN-A- 105 187 173
- CN-A- 105 356 967
- US-A1- 2014 036 818
- CATT: "UCI transmission for Rel-14 eLAA", 3GPP DRAFT; R1-164198, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096535, Retrieved from the Internet: URL:http://www.3gpp.org/ftp/tsg_ran/WG1_RL 1/TSGR1_85/Docs/ [retrieved on 2016-05-14]
- LG ELECTRONICS: "PUCCH design in LAA", 3GPP DRAFT; R1-162469 PUCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080207, Retrieved from the Internet: URL:http://www.3gpp.org/ftp/tsg_ran/WG1_RL 1/TSGR1_84b/Docs/ [retrieved on 2016-04-02]
- INTEL CORPORATION: "Transmission of Uplink Control Information on an LAA SCell", 3GPP DRAFT; R1-162357, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080136, Retrieved from the Internet: URL:http://www.3gpp.org/ftp/tsg_ran/WG1_RL 1/TSGR1_84b/Docs/ [retrieved on 2016-04-02]
- CATT: "UCI transmission for Rel-14 eLAA", 3GPP DRAFT; R1-162262, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080067, Retrieved from the Internet: URL:http://www.3gpp.org/ftp/tsg_ran/WG1_RL 1/TSGR1_84b/Docs/ [retrieved on 2016-04-02]

## Description

### TECHNICAL FIELD

The present disclosure relates to the field of mobile communications technologies, and in particular, to a method for transmitting HARQ acknowledgement information and a device.

### BACKGROUND

In a downlink hybrid automatic repeat request (Hybrid Automatic Repeat-request, HARQ) in frequency division duplex (Frequency Division Duple, FDD), a base station sends downlink data to user equipment (User Equipment, UE) in a subframe n. After receiving the downlink data, the UE sends HARQ acknowledgement information to the base station in a subframe n+4. If the HARQ acknowledgement information sent by the UE is a negative acknowledgement (NACK), the base station may re-transmit the downlink data to the UE in a subframe n+8.

In a downlink HARQ in time division duplex (Time Division Duple, TDD), a base station sends downlink data to UE in a subframe n. After receiving the data, the UE may send, based on different uplink/downlink configurations (UL/DL configuration) shown in Table 1, HARQ acknowledgement information to the base station in a subframe n+k.

**Table 1**

| Uplink/downlink configuration | Subframe (n) | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7,6 | 4 | - | - | - | 7,6 | 4 | - |
| 2 | - | - | 8, 7, 4, 6 | - | - | - | - | 8, 7, 4, 6 | - | - |
| 3 | - | - | 7, 6, 11 | 6, 5 | 5,4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11, 6 | - | - | - | - | - | - | - |
| 6 | - | - | 7 | 7 | 5 | - | - | 7 | 7 | - |

However, for a licensed-assisted access using Long Term Evolution (Licensed-Assisted Access Using Long Term Evolution, LAA-LTE) system, because time division multiplexing (Time Division Multiplexing, TDM) is used for uplink/downlink transmission in LAA-LTE, and there is no fixed uplink/downlink configuration, if a HARQ feedback solution in FDD is used in the LAA-LTE system, the subframe N+4 is probably not an uplink subframe, and corresponding HARQ acknowledgement information cannot be sent. In addition, because there is no fixed uplink/downlink configuration in the LAA-LTE system, a HARQ feedback solution in TDD cannot be used either. Therefore, in the LAA-LTE system, there is currently no solution for performing HARQ feedback on an unlicensed carrier.

CATT: "UCI transmission for Rel-14 eLAA", 3GPP DRAFT; R1-164198, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG1, no. Nanjing, China; 20160523- 20160527 14 May 2016 relates to UCI transmission.

INTEL CORPORATION: "Transmission of Uplink Control Information on an LAA SCell", 3GPP DRAFT; R1-162357, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE, vol. RAN WG1, no. Busan, Korea; relates to transmission of uplink control information on an LAA SCell.

### SUMMARY

Aspects of the present disclosure provide a method for transmitting HARQ acknowledgement information to provide a manner of performing HARQ feedback in an LAA-LTE system.

Various aspects of the present disclosure have been defined in the independent claims. Further technical features of each of these aspects have been defined in the respective dependent claims.

In the aspects of the present disclosure, the network device indicates a subframe in which the user equipment sends the HARQ acknowledgement information, and the user equipment does not need to select a subframe on its own, thereby minimizing a possibility that the HARQ acknowledgement information fails to be sent because a subframe selected by the user equipment may not be an uplink subframe, and improving a success rate of sending the HARQ acknowledgement information.

### BRIEF DESCRIPTION OF DRAWINGS

To describe the technical solutions in the aspects of the present disclosure more clearly, the following briefly describes the accompanying drawings required for describing the aspects of the present disclosure.
FIG. 1 is a schematic diagram of an application scenario according to an aspect of the present disclosure;
FIG. 2 is a flowchart of a method for transmitting HARQ acknowledgement information according to an aspect of the present disclosure;
FIG. 3 is a schematic diagram of sending HARQ acknowledgement information by user equipment according to an aspect of the present disclosure;
FIG. 4 is a schematic diagram of sending HARQ acknowledgement information by user equipment according to an aspect of the present disclosure;
FIG. 5 is a schematic structural diagram of a network device according to an aspect of the present disclosure;
FIG. 6 is a schematic structural diagram of user equipment according to an aspect of the present disclosure;
FIG. 7 is a schematic structural diagram of a network device according to an aspect of the present disclosure; and
FIG. 8 is a schematic structural diagram of user equipment according to an aspect of the present disclosure.

### DESCRIPTION OF ASPECTS

The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.

To make the objectives, technical solutions, and advantages of the aspects of the present disclosure clearer, the following clearly describes the technical solutions in the aspects of the present disclosure with reference to the accompanying drawings in the aspects of the present disclosure. Apparently, the described aspects are some but not all of the aspects of the present disclosure.

In the following, some terms in the present disclosure are described, to help persons skilled in the art have a better understanding.
(1) User equipment is a device that provides a user with voice and/or data connectivity, and for example, may include a handheld device having a wireless connection function or a processing device connected to a wireless modem. The user equipment may communicate with a core network by using a radio access network (Radio Access Network, RAN), and exchange voice and/or data with the RAN. The user equipment may include UE, a wireless terminal device, a mobile terminal device, a subscriber unit (Subscriber Unit), a subscriber station (Subscriber Station), a mobile station (Mobile Station), a mobile console (Mobile Console), a remote station (Remote Station), an access point (Access Point, AP), a remote terminal (Remote Terminal), an access terminal (Access Terminal), a user terminal (User Terminal), a user agent (User Agent), a user device (User Device), or the like. For example, the user equipment may be a mobile phone (or referred to as a "cellular" phone), a computer having a mobile terminal, a portable mobile apparatus, a pocket-sized mobile apparatus, a handheld mobile apparatus, a computer built-in mobile apparatus or an in-vehicle mobile apparatus. For example, the user equipment may be a device such as a personal communications service (Personal Communication Service, PCS) phone, a cordless telephone set, a Session Initiation Protocol (SIP) phone, a wireless local loop (Wireless Local Loop, WLL) station, or a personal digital assistant (Personal Digital Assistant, PDA).
(2) A network device is, for example, a base station (for example, an access point), and may be specifically a device that communicates with a wireless terminal device over an air interface by using one or more sectors in an access network. The base station may be configured to perform conversion between a received over-the-air frame and an IP packet, and is used as a router between the wireless terminal device and the rest of the access network. The rest of the access network may include an Internet Protocol (IP) network. The base station may further coordinate attribute management of the air interface. For example, the base station may be an evolved base station (a NodeB or an eNB or an e-NodeB, evolved NodeB) in a system such as a Long Term Evolution (Long Term Evolution, LTE) system or an LTE-Advanced (LTE-Advanced, LTE-A) system. This is not limited in the aspects of the present disclosure.
(3) An LAA-LTE system is a system in which an LTE technology is used in an unlicensed carrier, and a licensed carrier is used as a primary cell (PCell) and the unlicensed carrier is used as a secondary cell (SCell) based on a carrier aggregation architecture. In addition, to ensure that the LAA technology can coexist with another technology used in the unlicensed carrier, a channel contention access mechanism of listen before talk (Listen-Before-Talk, LBT) is used in the LAA-LTE system, that is, both the user equipment and the network device need to preempt a channel first before sending data on the unlicensed carrier, and can send the data only when the channel is successfully preempted.
(4) A physical downlink control channel is used to transmit control information, and may be, for example, a physical downlink control channel (Physical Downlink Control Channel, PDCCH), or may be another physical downlink control channel, or the PDCCH may have another name. This is not limited in the aspects of the present disclosure.
(5) The terms "system" and "network" may be used interchangeably in the aspects of the present disclosure. "A plurality of" means two or more than two. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects unless specified otherwise.

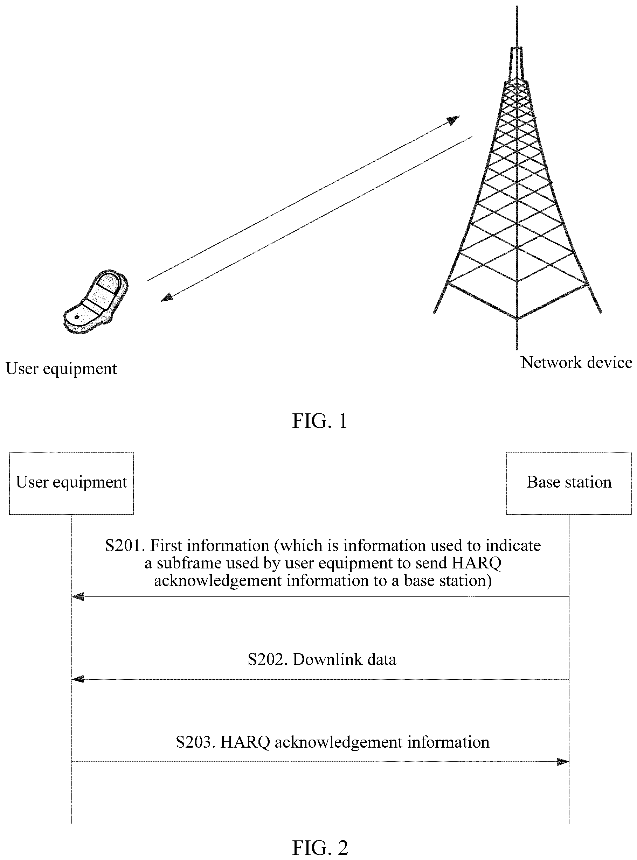

An application scenario of an aspect of the present disclosure is described first. FIG. 1 includes user equipment and a network device. The user equipment and the network device may communicate with each other. After the network device sends downlink data to the user equipment, the user equipment returns HARQ acknowledgement information to the network device depending on whether the downlink data is successfully received. The HARQ acknowledgement information includes an acknowledgement (ACK) and a NACK. If the user equipment successfully receives the downlink data sent by the network device, the user equipment may return an ACK to the network device, and the network device may continue to transmit new data or end the transmission process. However, if the user equipment fails to receive the downlink data sent by the network device, the user equipment may return a NACK to the network device, and the network device may re-transmit the data that is transmitted last time, to maximize a success rate of data transmission.

However, in the LAA-LTE system, there is no fixed uplink/downlink configuration, and therefore a subframe that is selected by the user equipment and in which the user equipment sends the HARQ acknowledgement information to the network device is probably not an uplink subframe, leading to a transmission failure of the HARQ acknowledgement information. In view of this, an aspect of the present disclosure provides a new method for transmitting HARQ acknowledgement information. It should be known that, the method provided in this aspect of the present disclosure may be applied to an LAA-LTE system, and in addition may be applied to another system without a fixed uplink/downlink configuration, or may be applied to a system having a fixed uplink/downlink configuration. For example, the technical solution provided in this aspect of the present disclosure may also be applied to an FDD system, a TDD system, or the like. This is not limited in this aspect of the present disclosure.

The technical solutions provided in the aspects of the present disclosure are described below with reference to the accompanying drawings in the specification.

Referring to FIG. 2, an aspect of the present disclosure provides a method for transmitting HARQ acknowledgement information applied to an application scenario. The application scenario shown in FIG. 1 is used as an example. In this aspect of the present disclosure, that a network device is a base station is used as an example.

S201: When sending downlink data to user equipment in a subframe n, the base station may send first information to user equipment at the same time, where the first information is information used to indicate a subframe used by the user equipment to send HARQ acknowledgement information to the base station on an unlicensed carrier. The user equipment receives the first information sent by the base station.

In an implementation, the first information may be sent by using a physical downlink control channel. For example, the first information may be carried in downlink control information of the physical downlink control channel (where this is used as an example in the aspect shown in FIG. 2), or the first information may be sent separately, or the first information may be carried in other information in the physical downlink control channel. This is not limited in this aspect of the present disclosure.

The downlink control information is scheduling information sent by the base station to the user equipment, and the downlink control information is, for example, downlink control information (Downlink Control Information, DCI), or may be other information. For example, before sending the downlink data to the user equipment, the base station may first send DCI to the user equipment, and schedules a downlink transmission resource to the user equipment by using the DCI, so that the user equipment may receive, based on the downlink transmission resource indicated by the DCI, the downlink data sent by the base station. The downlink control information may carry uplink/downlink transmission resource allocation information, HARQ information, power control information, or the like.

That the base station sends the downlink data to the user equipment is used as an example. Currently, the DCI sent by the base station to the user equipment usually includes a downlink transmission resource scheduled for the downlink data. In a system having a fixed uplink/downlink configuration, a subframe in which the user equipment feeds back the HARQ acknowledgement information for the downlink data is usually specified by using a protocol. However, for a system without a fixed uplink/downlink configuration, for example, an LAA-LTE system, a subframe that is selected by the user equipment and in which the HARQ acknowledgement information is sent is probably not an uplink subframe, and this may lead to a failure of sending the HARQ acknowledgement information. Therefore, in this aspect of the present disclosure, the base station may send the first information to the user equipment, the first information may indicate a subframe in which the user equipment sends the HARQ acknowledgement information, and the user equipment does not need to select a subframe on its own. In addition, uplink subframes are known to the base station, and therefore a possibility that a subframe selected by the user equipment is not an uplink subframe can be minimized, thereby improving a success rate of sending the HARQ acknowledgement information.

In an implementation, the first information may be used to indicate a single subframe. In this case, the first information may include a subframe index or a subframe index offset of the single subframe indicated by the first information. If the first information includes the subframe index offset of the indicated single subframe, the subframe index offset may be an offset of the subframe index of the subframe indicated by the first information relative to a subframe index of a subframe in which the network device sends downlink data to the user equipment, and the downlink data is downlink data corresponding to the HARQ acknowledgement information. The correspondence herein means that the HARQ acknowledgement information is used for feeding back whether the downlink data is successfully received by the user equipment. For example, the base station sends the DCI to the user equipment, and the DCI is used to schedule the downlink data sent by the base station to the user equipment in the subframe n. The first information is carried in the DCI. One or more bits (bit) are newly added to the DCI, and the newly-added bit is used as the first information to carry k or n+k to indicate the subframe n+k in which the user equipment sends the HARQ acknowledgement information to the base station for the downlink data. n+k is an index of the subframe in which the user equipment sends the HARQ acknowledgement information. If the first information includes k, the user equipment may calculate n+k on its own, and k may be considered as the subframe index offset. If the first information directly includes n+k, the user equipment does not need to perform calculation.

If the first information is used to indicate a single subframe, the subframe selected by the base station may be an uplink subframe at a shortest distance from n. For example, the base station sends downlink data in the subframe n, the subframe n, a subframe n+1, a subframe n+2, and a subframe n+3 are all downlink subframes, and a subframe n+4, a subframe n+5, a subframe n+6, and a subframe n+7 are all uplink subframes. Among the uplink subframes, the subframe n+4 is at a shortest distance from the subframe n, that is, a difference between n+4 and n is the smallest. Therefore, the base station may enable the first information to indicate the subframe n+4, so that a delay in feeding back the HARQ acknowledgement information may be reduced as much as possible. Certainly, a subframe indicated by the first information is not limited thereto. The base station may also select, based on another factor, a proper uplink subframe as the subframe indicated by the first information. For example, it may be required that a distance between a subframe in which a HARQ acknowledgement message is fed back and a subframe in which the base station sends the downlink data be greater than or equal to 4 ms, and therefore k in a selected uplink subframe n+k is greater than or equal to 4.

In an alternative solution of the first information indicating the single subframe, the first information may be used to indicate a plurality of subframes. This may also be considered as that the first information indicates a subframe window, and the subframe window includes the plurality of subframes indicated by the first information. In this aspect of the present disclosure, the first information may include one or more of subframe indexes of the plurality of subframes in the subframe window indicated by the first information, a subframe index of a start subframe and a subframe index of an end subframe in the subframe window, and a subframe index of a start subframe in the subframe window and subframe span information. The subframe span information is used to indicate a quantity of the subframes indicated by the first information, that is, a subframe index of a subframe that is indicated by the first information and that is included in the subframe window may be obtained based on the subframe index of the start subframe in the subframe window and the subframe span information. If the first information includes subframe indexes of a plurality of subframes, the plurality of subframes may be consecutive subframes or non-consecutive subframes.

If the first information is used to indicate a subframe window, the start subframe selected by the base station in the subframe window may be an uplink subframe at a shortest distance from n. For example, the base station sends downlink data in the subframe n, the subframe n, a subframe n+1, a subframe n+2, and a subframe n+3 are all downlink subframes, and a subframe n+4, a subframe n+5, a subframe n+6, and a subframe n+7 are uplink subframes. Among the uplink subframes, the subframe n+4 is at a shortest distance from the subframe n, that is, a difference between n+4 and n is the smallest. Therefore, the base station may enable the start subframe in the subframe window indicated by the first information to be the subframe n+4. In addition, in the subframe window indicated by the first information, an excessively large span of the subframe may lead to inadequate time efficiency, and therefore the span of the subframe window indicated by the first information may be selected to be within a proper range, for example, to be less than or equal to 10 or to be less than or equal to 8. In this way, a delay in feeding back the HARQ acknowledgement information may be minimized. Certainly, a subframe indicated by the first information is not limited thereto. The base station may also select, based on another factor, a proper uplink subframe as the subframe indicated by the first information.

For example, the base station sends the DCI to the user equipment, and the DCI is used to schedule the downlink data sent by the base station to the user equipment in the subframe n. The first information is carried in the DCI. One or more bits (bit) are newly added to the DCI, and the newly-added bit is used to carry the first information indicating the subframe window, to indicate the uplink subframe that is included in the subframe window and in which the user equipment sends the HARQ acknowledgement information for the downlink data to the base station.

For example, the subframe window indicated by the first information is a subframe window whose start subframe is a subframe n+4 and whose end subframe is a subframe n+7, and the subframe window includes four uplink subframes, namely, the subframe n+4, a subframe n+5, a subframe n+6, and the subframe n+7. The first information may include subframe indexes, namely, n+4, n+5, n+6, and n+7, of the four subframes. Alternatively, the first information may include a subframe index of the start subframe and a subframe index of the end subframe in the subframe window, the subframe index of the start subframe is n+4, and the subframe index of the end subframe is n+7. Based on the subframe indexes, the user equipment may learn that the subframes indicated by the first information are the subframe n+4, the subframe n+5, the subframe n+6, and the subframe n+7. Alternatively, the first information may include a subframe index of the start subframe in the subframe window and subframe span information, the subframe index of the start subframe is n+4, and the subframe span information is 3. Based on the subframe index and the subframe span information, the user equipment may learn that the subframes indicated by the first information are the subframe n+4, the subframe n+5, the subframe n+6, and the subframe n+7. Certainly, the numbers herein are merely examples provided to describe the solution in this aspect of the present disclosure, and this is not limited during actual application.

In addition, the foregoing example describes a case in which the subframe indexes of the subframes indicated by the first information are consecutive. During actual application, the subframe indexes indicated by the first information may alternatively be nonconsecutive. For example, the subframe n+4, the subframe n+5, the subframe n+6, and the subframe n+7 are all uplink subframes, and the first information may be used to indicate some of the uplink subframes. For example, the first information indicates the subframe n+4, the subframe n+6, and the subframe n+7 but does not indicate the subframe n+5, or indicates the subframe n+4 and the subframe n+7 but does not indicate the subframe n+5 and the subframe n+6. In this case, the subframe indexes indicated by the first subframe are nonconsecutive.

S202. The base station sends the downlink data to the user equipment, and the user equipment receives the downlink data.

In this aspect of the present disclosure, that the first information is carried in DCI is used as an example. The DCI is used to schedule a downlink transmission resource. Therefore, after sending the DCI to the user equipment, the base station needs to send downlink data scheduled by using the DCI to the user equipment.

S203. The user equipment sends HARQ acknowledgement information for the downlink data sent by the base station, and the base station receives the HARQ acknowledgement information. If the user equipment determines that the downlink data is successfully received, the HARQ acknowledgement information sent by the user equipment is an ACK. If the user equipment determines that the downlink data fails to be received, the HARQ acknowledgement information sent by the user equipment is a NACK.

The user equipment determines, depending on whether the downlink data is successfully received, whether the HARQ acknowledgement information sent to the base station is an ACK or a NACK, and then sends the HARQ acknowledgement information to the base station on an unlicensed carrier in the subframe indicated by the first information.

In an implementation, if the first information includes a subframe index of a single subframe, the user equipment directly sends the HARQ acknowledgement information to the base station based on the subframe index included in the first information.

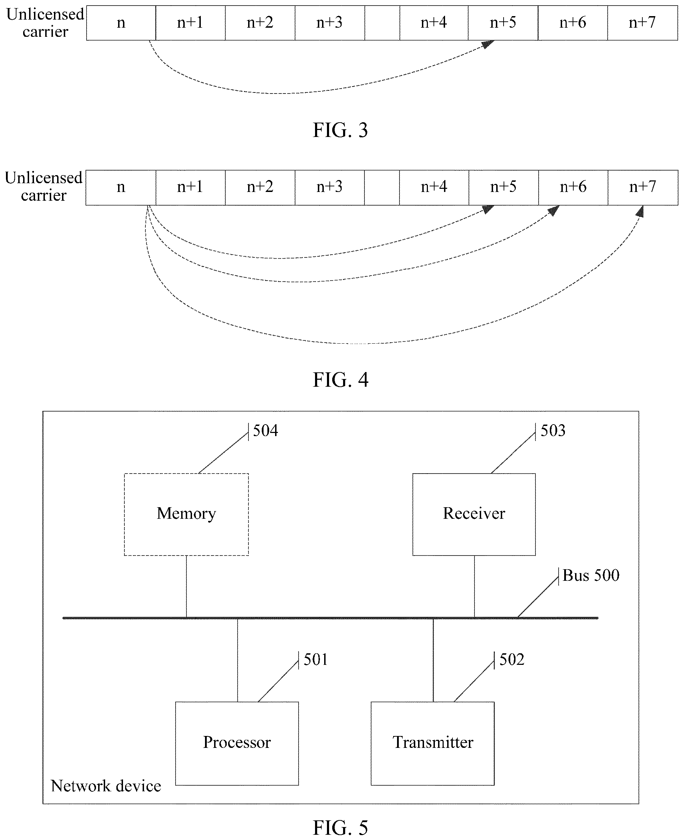

For example, referring to FIG. 3, the base station sends DCI to the user equipment on a PDCCH of the subframe n, the DCI includes the first information, and the first information indicates the subframe n+5, that is, k=5, that is on the unlicensed carrier and in which the user equipment sends the HARQ acknowledgement information for the downlink data to the base station. After receiving the DCI, the user equipment preempts, based on indication in the DCI, a channel in the subframe n+5 on the unlicensed carrier by using an LBT mechanism. If the channel is successfully preempted, the user equipment sends the HARQ acknowledgement information for the downlink data to the base station in the subframe n+5. In FIG. 3, for example, the subframe n, the subframe n+1, the subframe n+2, and the subframe n+3 are downlink subframes, and the subframe n+4, the subframe n+5, the subframe n+6, and the subframe n+7 are uplink subframes.

However, because the user equipment needs to preempt a channel first before sending data on an unlicensed carrier, the user equipment may fail to preempt a channel. The aspect shown in FIG. 3 is still used as an example. If the user equipment fails to preempt a channel in the subframe n+5 on the unlicensed carrier, apparently, the user equipment cannot send the HARQ acknowledgement information to the base station by using the subframe indicated by the base station. In this case, to ensure that the HARQ acknowledgement information can be sent to the base station, the user equipment may send the corresponding HARQ acknowledgement information on another unlicensed carrier. Certainly, a premise for doing this is that there are a plurality of carriers, and certainly a channel needs to be preempted when the HARQ acknowledgement information is sent on each unlicensed carrier. If a channel on one of the unlicensed carriers is successfully preempted, the HARQ acknowledgement information is sent to the base station on the unlicensed carrier. There may be another case that the user equipment fails to preempt a channel on all unlicensed carriers of the user equipment. In this case, the user equipment may send the HARQ acknowledgement information to the base station on a licensed carrier. Alternatively, if the user equipment fails to preempt a channel in the subframe n+5 on an unlicensed carrier, that is, fails to preempt a channel on an unlicensed carrier indicated by the first information, the user equipment may directly send the HARQ acknowledgement information on the licensed carrier. A channel does not need to be preempted on the licensed carrier, and the HARQ acknowledgement information can be directly sent, so that efficiency is relatively high and a success rate of sending the HARQ acknowledgement information is improved.

If the user equipment fails to send the HARQ acknowledgement information in the subframe indicated by the first information, when the user equipment sends the HARQ acknowledgement information to the network device on the unlicensed carrier or the licensed carrier, the user equipment may first send a notification message to the network device. The notification message is used to instruct the user equipment to send the HARQ acknowledgement information to the network device on the unlicensed carrier, or is used to instruct the user equipment to send the HARQ acknowledgement information to the network device on the unlicensed carrier, so that the network device may listen and receive the HARQ acknowledgement information at a correct location. If the user equipment sends the HARQ acknowledgement information successfully after making attempts on several carriers to send the HARQ acknowledgement information, for example, making separate attempts to preempt a channel on a plurality of unlicensed carriers, each time the user equipment sends the HARQ acknowledgement information on another carrier, the user equipment needs to send a notification message to the network device.

Alternatively, in an alternative solution of sending the notification message to the network device by the user equipment, the network device is a recipient. If the network device does not receive, in the subframe indicated by the first information, the HARQ acknowledgement information sent by the user equipment, the network device determines that the user equipment fails to send the HARQ acknowledgement information, and the network device may send the notification message to the user equipment. The notification message is used to instruct the user equipment to send the HARQ acknowledgement information to the network device on an unlicensed carrier. In this case, the notification message may indicate a specific unlicensed carrier, or the notification message is used to instruct the user equipment to send the HARQ acknowledgement information to the network device on a licensed carrier. In this way, the user equipment may send the HARQ acknowledgement information on another carrier based on the indication of the network device, and the network device may correctly receive the HARQ acknowledgement information. If the network device sends a notification message to the user equipment once, where the notification message is used to instruct the user equipment to send the HARQ acknowledgement information to the network device on the unlicensed carrier, and the network device still does not receive the HARQ acknowledgement information on the indicated unlicensed carrier, the network device determines that the user equipment still sends a device, and the network device may continue to send the notification message to the user equipment, to instruct the user equipment to send the HARQ acknowledgement information on another unlicensed carrier or a licensed carrier again.

In another implementation, if the first information is used to indicate a subframe window, the user equipment may send the HARQ acknowledgement information to the base station in any subframe in the subframe window indicated by the first information.

For example, referring to FIG. 4, the base station sends DCI to the user equipment on a PDCCH of the subframe n, the DCI includes the first information, and the first information indicates the subframe n+5, the subframe n+6 or the subframe n+7 that is on the unlicensed carrier and in which the user equipment sends the HARQ acknowledgement information for the downlink data to the base station. After receiving the DCI, the user equipment may first preempt, based on the indication in the DCI, a channel in the subframe n+5 on the unlicensed carrier by using an LBT mechanism. If the channel is successfully preempted, the user equipment sends the HARQ acknowledgement information for the downlink data to the base station in the subframe n+5 on the unlicensed carrier, and no longer needs to consider sending the HARQ acknowledgement information for the downlink data to the base station in the subframe n+6 and the subframe n+7. If the user equipment fails to preempt a channel in the subframe n+5 on the unlicensed carrier, the user equipment may preempt a channel in the subframe n+6 on the unlicensed carrier by using the LBT mechanism. If the channel is successfully preempted, the user equipment sends the HARQ acknowledgement information for the downlink data to the base station in the subframe n+6 on the unlicensed carrier, and no longer needs to consider sending the HARQ acknowledgement information for the downlink data to the base station in the subframe n+7. If the user equipment also fails to preempt the channel in the subframe n+6 on the unlicensed carrier, the user equipment may preempt a channel in the subframe n+7 on the unlicensed carrier by using the LBT mechanism, and the rest may be deduced by analogy. In FIG. 4, for example, the subframe n, the subframe n+1, the subframe n+2, and the subframe n+3 are downlink subframes, and the subframe n+4, the subframe n+5, the subframe n+6, and the subframe n+7 are uplink subframes.

It can be learned that, because the user equipment needs to preempt a channel, the user equipment may probably fail to preempt a channel on all of the subframe n+5, the subframe n+6, and the subframe n+7, and as a result, the user equipment cannot send the HARQ acknowledgement information to the base station in a subframe indicated by the base station. In this case, to ensure that the HARQ acknowledgement information can be sent to the base station, if there are a plurality of carriers, the user equipment may send the corresponding HARQ acknowledgement information on another unlicensed carrier. If the user equipment fails to preempt a channel on all unlicensed carriers of the user equipment, the user equipment may send the HARQ acknowledgement information to the base station on a licensed carrier. Alternatively, if the user equipment fails to preempt a channel in all subframes indicated by the first information on the unlicensed carrier, the user equipment may directly send the HARQ acknowledgement information on the licensed carrier. A channel does not need to be preempted on the licensed carrier, and the HARQ acknowledgement information can be directly sent, so that efficiency is relatively high and a success rate of sending the HARQ acknowledgement information is improved.

Similarly, if the user equipment fails to send the HARQ acknowledgement information in the subframe indicated by the first information, when the user equipment sends the HARQ acknowledgement information to the network device on the unlicensed carrier or the licensed carrier, the user equipment may first send a notification message to the network device. The notification message is used to instruct the user equipment to send the HARQ acknowledgement information to the network device on the unlicensed carrier, or is used to instruct the user equipment to send the HARQ acknowledgement information to the network device on the unlicensed carrier, so that the network device may listen and receive the HARQ acknowledgement information at a correct location.

Alternatively, in an alternative solution of sending the notification message to the network device by the user equipment, the network device is a recipient. If the network device does not receive, in the subframe indicated by the first information, the HARQ acknowledgement information sent by the user equipment, the network device determines that the user equipment fails to send the HARQ acknowledgement information, and the network device may send the notification message to the user equipment. The notification message is used to instruct the user equipment to send the HARQ acknowledgement information to the network device on an unlicensed carrier. In this case, the notification message may indicate a specific unlicensed carrier, or the notification message is used to instruct the user equipment to send the HARQ acknowledgement information to the network device on a licensed carrier. In this way, the user equipment may send the HARQ acknowledgement information on another carrier based on the indication of the network device, and the network device may correctly receive the HARQ acknowledgement information. For descriptions of sending a notification message by the user equipment to the network device or sending a notification message by the network device to the user equipment, refer to related descriptions in the part in which the first information includes the subframe index of the single subframe. Details are not described herein again.

For the user equipment, because the licensed carrier needs to transmit a relatively large amount of information, a resource on the licensed carrier is relatively valuable. Therefore, in this aspect of the present disclosure, the HARQ acknowledgement information is preferentially sent on an unlicensed carrier. Certainly, if the HARQ acknowledgement information is not successfully sent on the unlicensed carrier, the HARQ acknowledgement information may be sent on the licensed carrier instead, to ensure a high success rate of sending the HARQ acknowledgement information.

A device provided in an aspect of the present disclosure is described in the following with reference to the accompanying drawings.

Referring to FIG. 5, an aspect of the present disclosure provides a first network device. The network device may include a processor 501, a transmitter 502, and a receiver 503.

The processor 501 may include a central processing unit (CPU) or an application-specific integrated circuit (Application-Specific Integrated Circuit, ASIC), may include one or more integrated circuits for controlling execution of programs, may include a hardware circuit developed by using a field programmable gate array (Field Programmable Gate Array, FPGA), and may include a baseband chip.

The transmitter 502 may be configured to perform network communication with an external device, for example, may perform communication with an external device by using a network such as an Ethernet network, a radio access network, a wireless local area network, or a wired network.

The receiver 503 may be configured to perform network communication with an external device, for example, may perform communication with an external device by using a network such as an Ethernet network, a radio access network, a wireless local area network, or a wired network.

Optionally, the receiver 503 and the transmitter 502 may be one functional module, for example, a functional module that can implement both a sending function and a receiving function. Alternatively, the receiver 503 and the transmitter 502 may be different submodules in a functional module. Alternatively, the receiver 503 and the transmitter 502 may be two independent functional modules.

Optionally, the network device may further include a memory 504. There may be one or more memories 504. The memory 504 may include a read only memory (Read Only Memory, ROM), a random access memory (Random Access Memory, RAM), a magnetic disk memory, and the like. The memory 504 may be configured to store program code required by the processor 501 for executing a task, may further be configured to store data, and the like. Being an optional functional module instead of an indispensable functional module, the memory 504 is shown by using dashed lines in FIG. 5.

The memory 504, the receiver 503, and the transmitter 502 may be connected to the processor 501 by using a bus 500 (where this is used as an example in FIG. 5), or may be connected to the processor 501 by using a dedicated connection wire.

The processor 501 is designed and programmed, so that code corresponding to the method shown in the foregoing is built into a chip, enabling the chip to perform, when running, the method shown in the foregoing aspects. How to design and program the processor 501 is a technology well known to persons skilled in the art. Details are no longer described again herein.

The network device may be configured to perform the method provided in the aspect shown in FIG. 2, and may be, for example, the foregoing network device. Therefore, for functions and the like implemented by the units in the network device, refer to the description of the foregoing method part, and details are not described.

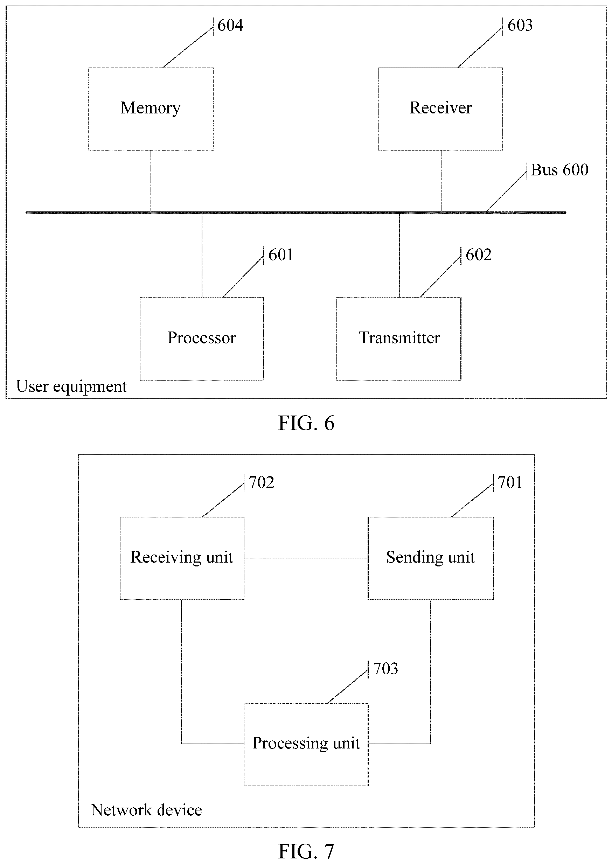

Referring to FIG. 6, an aspect of the present disclosure provides first user equipment. The user equipment may include a processor 601, a transmitter 602, and a receiver 603.

The processor 601 may include a CPU or an ASIC, may include one or more integrated circuits for controlling execution of programs, may include a hardware circuit developed by using an FPGA, and may include a baseband chip.

The transmitter 602 may be configured to perform network communication with an external device, for example, may perform communication with an external device by using a network such as an Ethernet network, a radio access network, a wireless local area network, or a wired network.

The receiver 603 may be configured to perform network communication with an external device, for example, may perform communication with an external device by using a network such as an Ethernet network, a radio access network, a wireless local area network, or a wired network.

Optionally, the receiver 603 and the transmitter 602 may be one functional module, for example, a functional module that can implement both a sending function and a receiving function. Alternatively, the receiver 603 and the transmitter 602 may be different submodules in a functional module. Alternatively, the receiver 603 and the transmitter 602 may be two independent functional modules.

Optionally, the user equipment may further include a memory 604. There may be one or more memories 604. The memory 604 may include a ROM, a RAM, a magnetic disk memory, and the like. The memory 604 may be configured to store program code required by the processor 601 for executing a task, may further be configured to store data, and the like. Being an optional functional module instead of an indispensable functional module, the memory 604 is shown by using dashed lines in FIG. 6.

The memory 604, the receiver 603, and the transmitter 602 may be connected to the processor 601 by using a bus 600 (where this is used as an example in FIG. 6), or may be connected to the processor 601 by using a dedicated connection wire.

The processor 601 is designed and programmed, so that code corresponding to the method shown in the foregoing is built into a chip, enabling the chip to perform, when running, the method shown in the foregoing aspects. How to design and program the processor 601 is a technology well known to persons skilled in the art. Details are no longer described again herein.

The user equipment may be configured to perform the method provided in the aspect shown in FIG. 2, and may be, for example, the foregoing user equipment. Therefore, for functions and the like implemented by the units in the user equipment, refer to the description of the foregoing method part, and details are not described.

Referring to FIG. 7, an aspect of the present disclosure provides a second network device. The network device may include a sending unit 701 and a receiving unit 702.

Optionally, the network device may further include a processing unit 703 that is also shown in FIG. 7. Being an optional functional module, the processing unit 703 is shown in FIG. 7 by using dashed lines.

During actual application, a physical device corresponding to the sending unit 701 may be the transmitter 502 in the aspect shown in FIG. 5, a physical device corresponding to the receiving unit 702 may be the receiver 503 in the aspect shown in FIG. 5, and a physical device corresponding to the processing unit 703 may be the processor 501 in the aspect shown in FIG. 5.

The network device may be configured to perform the method provided in the aspect shown in FIG. 2, and may be, for example, the foregoing network device. Therefore, for functions and the like implemented by the units in the network device, refer to the description of the foregoing method part, and details are not described.

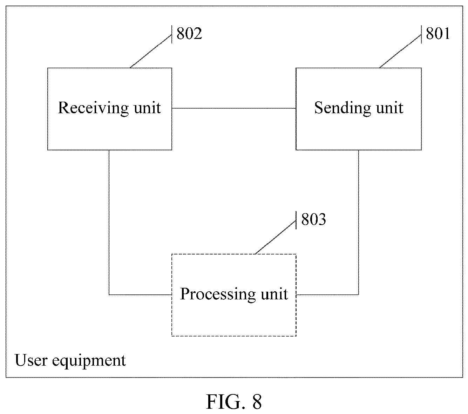

Referring to FIG. 8, an aspect of the present disclosure provides second user equipment. The user equipment may include a sending unit 801 and a receiving unit 802.

Optionally, the user equipment may further include a processing unit 803 that is also shown in FIG. 8. Being an optional functional module, the processing unit 803 is shown in FIG. 8 by using dashed lines.

During actual application, a physical device corresponding to the sending unit 801 may be the transmitter 602 in the aspect shown in FIG. 6, a physical device corresponding to the receiving unit 802 may be the receiver 603 in the aspect shown in FIG. 6, and a physical device corresponding to the processing unit 803 may be the processor 601 in the aspect shown in FIG. 6.

The user equipment may be configured to perform the method provided in the aspect shown in FIG. 2, and may be, for example, the foregoing user equipment. Therefore, for functions and the like implemented by the units in the user equipment, refer to the description of the foregoing method part, and details are not described.

In the aspects of the present disclosure, an uplink subframe is known to the network device, and therefore the network device may send the first information to the user equipment. The first information indicates a subframe that can be used by the user equipment to send the HARQ acknowledgement information to the network device. After receiving the first information, the user equipment may send the HARQ acknowledgement information to the network device based on the first information, that is, perform HARQ feedback. To be specific, the aspects of the present disclosure provide a manner of performing HARQ feedback, by using which the HARQ feedback can be desirably performed. In addition, the subframe indicated by the network device is the uplink subframe, so that a case is avoided that the user equipment selects a subframe on its own and therefore may fail to select a subframe.

In the present disclosure, it should be understood that the disclosed device and method may be implemented in other manners. For example, the described apparatus aspect is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the aspects of the present disclosure.

Functional units in the aspects of the present disclosure may be integrated into one processing unit, or each of the units may be an independent physical module.

When the integrated unit is implemented in the form of a software functional unit and sold or used as an independent product, the integrated unit may be stored in a computer-readable storage medium. Based on such an understanding, all of or a part of the technical solutions of the present disclosure may be implemented in a form of a software product. The computer software product is stored in a storage medium and includes several instructions for instructing a computer device, for example, a personal computer, a server, or a network device or a processor (processor) to perform all or some of the steps of the methods described in the aspects of the present disclosure. The foregoing storage medium includes: any medium that can store program code, such as a Universal Serial Bus flash drive (Universal Serial Bus flash drive), a removable hard disk, a read-only memory (Read-Only Memory, ROM), a random access memory (random access memory, RAM), a magnetic disk, or an optical disc.

The foregoing aspects are merely used to describe the technical solutions of the present disclosure. The foregoing aspects are merely intended to help understand the method of the present disclosure, and shall not be construed as a limitation on the aspects of the present disclosure, which shall be defined by the appended claims.

## Claims

1. A method for receiving hybrid automatic repeat request HARQ acknowledgement information, comprising:
sending (S201), by a network device, a first information to a user equipment, wherein the first information is information used for indicating a subframe used by the user equipment to send HARQ acknowledgement information to the network device on an unlicensed carrier; and
receiving (S203), by the network device, the HARQ acknowledgement information sent by the user equipment in the subframe indicated by the first information;
wherein:
after the receiving, by the network device in the subframe indicated by the first information, the HARQ acknowledgement information sent by the user equipment, the method further comprises:
if failing to receive the HARQ acknowledgement information in the subframe indicated by the first information, receiving, by the network device, a notification message sent by the user equipment, wherein the notification message is used to instruct the network device to receive the HARQ acknowledgement information on another unlicensed carrier or receive the HARQ acknowledgement information on a licensed carrier; or
if failing to receive the HARQ acknowledgement information in the subframe indicated by the first information, sending, by the network device, a notification message to the user equipment, wherein the notification message is used to instruct the user equipment to send the HARQ acknowledgement information on another unlicensed carrier.

2. The method according to claim 1, wherein the first information used for indicating a single subframe, and the first information comprises a subframe index or a subframe index offset of the indicated single subframe, the subframe index offset is used to indicate an offset of the subframe index of the single subframe relative to a subframe index of a subframe in which the network device sends downlink data to the user equipment, and the downlink data is downlink data corresponding to the HARQ acknowledgement information.

3. The method according to claim 1, wherein the first information used for indicating a subframe window, the first information comprises at least one of: subframe indexes of a plurality of subframes in the subframe window indicated by the network device, a subframe index of a start subframe and a subframe index of an end subframe in the subframe window, and a subframe index of a start subframe in the subframe window and subframe span information; and the subframe span information is used to indicate a quantity of the subframes indicated by the first information.

4. The method according to claim 3, wherein if the first information comprises the subframe indexes of the plurality of subframes, the plurality of subframes are consecutive subframes or non-consecutive subframes.

5. The method according to any one of claims 1 to 4, wherein the first information is carried in downlink control information of a physical downlink control channel.

6. A method for transmitting hybrid automatic repeat request HARQ acknowledgement information, comprising:
receiving (S201), by a user equipment, a first information sent by a network device, wherein the first information is information used to indicate a subframe used by the user equipment to send HARQ acknowledgement information to the network device on an unlicensed carrier; and
sending (S203), by the user equipment, the HARQ acknowledgement information to the network device in the subframe indicated by the first information;
after the sending, by the user equipment, in the subframe indicated by the first information, the HARQ acknowledgement information, the method further comprises:
if failing to send the HARQ acknowledgement information in the subframe indicated by the first information, sending, by the user equipment, a notification message to the network device, wherein the notification message is used to instruct the network device to receive the HARQ acknowledgement information on another unlicensed carrier or receive the HARQ acknowledgement information on a licensed carrier; or
if failing to send the HARQ acknowledgement information in the subframe indicated by the first information, receiving, by the user equipment, a notification message from the network device, wherein the notification message is used to instruct the user equipment to send the HARQ acknowledgement information on another unlicensed carrier.

7. The method according to claim 6, wherein the first information used for indicating a single subframe, and the first information comprises a subframe index or a subframe index offset of the indicated single subframe, the subframe index offset is used to indicate an offset of the subframe index of the single subframe relative to a subframe index of a subframe in which the network device sends downlink data to the user equipment, and the downlink data is downlink data corresponding to the HARQ acknowledgement information.

8. The method according to claim 6, wherein the first information used for indicating a subframe window, the first information comprises at least one of: subframe indexes of a plurality of subframes in the subframe window indicated by the network device, a subframe index of a start subframe and a subframe index of an end subframe in the subframe window, and a subframe index of a start subframe in the subframe window and subframe span information; and the subframe span information is used to indicate a quantity of the subframes indicated by the first information.

9. The method according to claim 8, wherein if the first information comprises the subframe indexes of the plurality of subframes, the plurality of subframes are consecutive subframes or non-consecutive subframes.

10. The method according to any one of claims 6 to 9, wherein the first information is carried in downlink control information of a physical downlink control channel.

11. The method according to any one of claims 6 to 10, wherein
after the receiving, by user equipment, first information sent by a network device, the method further comprises:
preempting, by the user equipment, a channel on the unlicensed carrier; and
the sending, by the user equipment, the HARQ acknowledgement information to the network device in the subframe indicated by the first information comprises:
if the user equipment successfully preempts a channel on the unlicensed carrier, sending, by the user equipment, the HARQ acknowledgement information to the network device in the subframe indicated by the first information.

12. The method according to claim 11, wherein the method further comprises:
if the user equipment fails to preempt a channel on the unlicensed carrier, sending, by the user equipment, the HARQ acknowledgement information to the network device on another unlicensed carrier or a licensed carrier in accordance with the notification message.

## Patentansprüche

1. Verfahren zum Empfangen von Hybrid-Automatic-Repeat-Request-HARQ-Bestätigungsinformationen, umfassend:
Senden (S201) einer ersten Information zu einem Benutzergerät durch eine Netzwerkvorrichtung, wobei es sich bei der ersten Information um eine Information handelt, die verwendet wird, um einen Unterrahmen anzuzeigen, der von dem Benutzergerät verwendet wird, um HARQ-Bestätigungsinformationen auf einem nicht lizenzierten Träger an die Netzwerkvorrichtung zu senden; und
Empfangen (S203), durch die Netzwerkvorrichtung, der HARQ-Bestätigungsinformationen, die von dem Benutzergerät in dem Unterrahmen gesendet werden, der von der ersten Information angezeigt wird;
wobei:
nach dem Empfangen der von dem Benutzergerät gesendeten HARQ-Bestätigungsinformationen durch die Netzwerkvorrichtung in dem von der ersten Information angezeigten Unterrahmen das Verfahren ferner Folgendes umfasst:
wenn der Empfang der HARQ-Bestätigungsinformationen in dem von der ersten Information angezeigten Unterrahmen fehlschlägt, Empfangen, durch die Netzwerkvorrichtung, einer Benachrichtigung, die von dem Benutzergerät gesendet wurde, wobei die Benachrichtigung verwendet wird, um die Netzwerkvorrichtung anzuweisen, die HARQ-Bestätigungsinformationen auf einem anderen nicht lizenzierten Träger zu empfangen oder die HARQ-Bestätigungsinformationen auf einem lizenzierten Träger zu empfangen; oder
wenn der Empfang der HARQ-Bestätigungsinformationen in dem von der ersten Information angezeigten Unterrahmen fehlschlägt, Senden einer Benachrichtigung an das Benutzergerät durch die Netzwerkvorrichtung, wobei die Benachrichtigung verwendet wird, um das Benutzergerät anzuweisen, die HARQ-Bestätigungsinformationen auf einem anderen nicht lizenzierten Träger zu senden.

2. Verfahren nach Anspruch 1, wobei die ersten Informationen verwendet werden, um einen einzelnen Unterrahmen anzuzeigen, und die erste Information einen Unterrahmenindex oder einen Unterrahmenindex-Offset des angezeigten einzelnen Unterrahmens umfasst, der Unterrahmenindex-Offset verwendet wird, um einen Offset des Unterrahmenindex des einzelnen Unterrahmens in Bezug auf einen Unterrahmenindex eines Unterrahmens anzuzeigen, in dem die Netzwerkvorrichtung Downlink-Daten zu dem Benutzergerät sendet, und es sich bei den Downlink-Daten um Downlink-Daten handelt, die den HARQ-Bestätigungsinformationen entsprechen.

3. Verfahren nach Anspruch 1, wobei die erste Information zum Anzeigen eines Unterrahmenfensters verwendet wird und die erste Information mindestens eines der Folgenden umfasst:
Unterrahmenindizes einer Vielzahl von Unterrahmen in dem von der Netzwerkvorrichtung angezeigten Unterrahmenfenster, einen Unterrahmenindex eines Startunterrahmens und einen Unterrahmenindex eines Endunterrahmens in dem Unterrahmenfenster, und einen Unterrahmenindex eines Startunterrahmens in dem Unterrahmenfenster und
Unterrahmenerstreckungsinformationen; und die Unterrahmenerstreckungsinformationen verwendet werden, um eine Menge der Unterrahmen anzuzeigen, die durch die erste Information angezeigt werden.

4. Verfahren nach Anspruch 3, wobei, wenn die erste Information die Unterrahmenindizes der Vielzahl von Unterrahmen umfasst, die Vielzahl von Unterrahmen aufeinanderfolgenden Unterrahmen oder nicht aufeinanderfolgenden Unterrahmen entspricht.

5. Verfahren nach einem der Ansprüche 1 bis 4, wobei die erste Information in Downlink-Steuerinformationen eines physikalischen Downlink-Steuerkanals transportiert wird.

6. Verfahren zum Übertragen von Hybrid-Automatic-Repeat-Request-HARQ-Bestätigungsinformationen, umfassend:
Empfangen (S201) einer ersten Information, die von einer Netzwerkvorrichtung gesendet wird, durch ein Benutzergerät, wobei es sich bei der ersten Information um eine Information handelt, die verwendet wird, um einen Unterrahmen anzuzeigen, der von dem Benutzergerät verwendet wird, um HARQ-Bestätigungsinformationen auf einem nicht lizenzierten Träger an die Netzwerkvorrichtung zu senden; und
Senden (S203), durch das Benutzergerät, der HARQ-Bestätigungsinformationen an die Netzwerkvorrichtung in dem Unterrahmen, der von der ersten Information angezeigt wird;
wobei nach dem Senden der HARQ-Bestätigungsinformationen durch das Benutzergerät in dem von der ersten Information angezeigten Unterrahmen, das Verfahren ferner Folgendes umfasst:
wenn das Senden der HARQ-Bestätigungsinformationen in dem von der ersten Information angezeigten Unterrahmen fehlschlägt, Senden einer Benachrichtigung an die Netzwerkvorrichtung durch das Benutzergerät, wobei die Benachrichtigung verwendet wird, um die Netzwerkvorrichtung anzuweisen, die HARQ-Bestätigungsinformationen auf einem anderen nicht lizenzierten Träger zu empfangen oder die HARQ-Bestätigungsinformationen auf einem lizenzierten Träger zu empfangen; oder
wenn das Senden der HARQ-Bestätigungsinformationen in dem von der ersten Information angezeigten Unterrahmen fehlschlägt, Empfangen einer Benachrichtigung von der Netzwerkvorrichtung durch das Benutzergerät, wobei die Benachrichtigung verwendet wird, um das Benutzergerät anzuweisen, die HARQ-Bestätigungsinformationen auf einem anderen nicht lizenzierten Träger zu senden.

7. Verfahren nach Anspruch 6, wobei die erste Information zum Anzeigen eines einzelnen Unterrahmens verwendet wird, und die erste Information einen Unterrahmenindex oder einen Unterrahmenindex-Offset des angezeigten einzelnen Unterrahmens umfasst, der Unterrahmenindex-Offset verwendet wird, um einen Offset des Unterrahmenindex des einzelnen Unterrahmens in Bezug auf einen Unterrahmenindex eines Unterrahmens anzuzeigen, in dem die Netzwerkvorrichtung Downlink-Daten zu dem Benutzergerät sendet, und es sich bei den Downlink-Daten um Downlink-Daten handelt, die den HARQ-Bestätigungsinformationen entsprechen.

8. Verfahren nach Anspruch 6, wobei die erste Information zum Anzeigen eines Unterrahmenfensters verwendet wird und die erste Information mindestens eines der Folgenden umfasst:
Unterrahmenindizes einer Vielzahl von Unterrahmen in dem von der Netzwerkvorrichtung angezeigten Unterrahmenfenster, einen Unterrahmenindex eines Startunterrahmens und einen Unterrahmenindex eines Endunterrahmens in dem Unterrahmenfenster, und einen Unterrahmenindex eines Startunterrahmens in dem Unterrahmenfenster und
Unterrahmenerstreckungsinformationen; und die Unterrahmenerstreckungsinformationen verwendet werden, um eine Menge der Unterrahmen anzuzeigen, die durch die erste Information angezeigt werden.

9. Verfahren nach Anspruch 8, wobei, wenn die erste Information die Unterrahmenindizes der Vielzahl von Unterrahmen umfasst, die Vielzahl von Unterrahmen aufeinanderfolgenden Unterrahmen oder nicht aufeinanderfolgenden Unterrahmen entspricht.

10. Verfahren nach einem der Ansprüche 6 bis 9, wobei die erste Information in Downlink-Steuerinformationen eines physikalischen Downlink-Steuerkanals transportiert wird.

11. Verfahren nach einem der Ansprüche 6 bis 10, wobei nach dem Empfangen der ersten Information, die von einer Netzwerkvorrichtung gesendet wird, durch das Benutzergerät das Verfahren ferner Folgendes umfasst:
Ausschließen eines Kanals auf dem nicht lizenzierten Träger durch das Benutzergerät; und
das Senden, durch das Benutzergerät, der HARQ-Bestätigungsinformationen an die Netzwerkvorrichtung in dem von der ersten Information angezeigten Unterrahmen Folgendes umfasst:
wenn das Benutzergerät einen Kanal auf dem nicht lizenzierten Träger erfolgreich ausschließt, Senden, durch das Benutzergerät, der HARQ-Bestätigungsinformationen an die Netzwerkvorrichtung in dem von der ersten Information angezeigten Unterrahmen.

12. Verfahren nach Anspruch 11, wobei das Verfahren ferner Folgendes umfasst:
wenn das Benutzergerät keinen Kanal auf dem nicht lizenzierten Träger ausschließen kann, Senden, durch das Benutzergerät, der HARQ-Bestätigungsinformationen an die Netzwerkvorrichtung auf einem anderen nicht lizenzierten Träger oder einem lizenzierten Träger gemäß der Benachrichtigung.

## Revendications

1. Procédé de réception d'informations d'accusé de réception de demande de répétition automatique hybride, HARQ, comprenant :
l'envoi (S201), par un dispositif de réseau, de premières informations à un équipement utilisateur, dans lequel les premières informations sont des informations utilisées pour indiquer une sous-trame utilisée par l'équipement utilisateur pour envoyer des informations d'accusé de réception HARQ au dispositif de réseau sur une porteuse sans licence ; et
la réception (S203), par le dispositif de réseau, d'informations d'accusé de réception HARQ envoyées par l'équipement utilisateur dans la sous-trame indiquée par les premières informations ;
dans lequel :
après la réception, par le dispositif de réseau dans la sous-trame indiquée par les premières informations, des informations d'accusé de réception HARQ envoyées par l'équipement utilisateur, le procédé comprend en outre :
en cas de non-réception des informations d'accusé de réception HARQ dans la sous-trame indiquée par les premières informations, la réception, par le dispositif de réseau, d'un message de notification envoyé par l'équipement utilisateur, dans lequel le message de notification est utilisé pour donner l'instruction au dispositif de réseau de recevoir les informations d'accusé de réception HARQ sur une autre porteuse sans licence ou de recevoir les informations d'accusé de réception HARQ sur une porteuse avec licence ; ou
en cas de non-réception des informations d'accusé de réception HARQ dans la sous-trame indiquée par les premières informations, l'envoi, par le dispositif de réseau, d'un message de notification à l'équipement utilisateur, dans lequel le message de notification est utilisé pour donner l'instruction à l'équipement utilisateur d'envoyer les informations d'accusé de réception HARQ sur une autre porteuse sans licence.

2. Procédé selon la revendication 1, dans lequel les premières informations sont utilisées pour indiquer une sous-trame unique, et les premières informations comprennent un indice de sous-trame ou un décalage d'indice de sous-trame de la sous-trame unique indiquée, le décalage d'indice de sous-trame est utilisé pour indiquer un décalage de l'indice de sous-trame de la sous-trame unique par rapport à un indice de sous-trame d'une sous-trame dans laquelle le dispositif de réseau envoie des données de liaison descendante à l'équipement utilisateur, et les données de liaison descendante sont des données de liaison descendante correspondant aux informations d'accusé de réception HARQ.

3. Procédé selon la revendication 1, dans lequel les premières informations sont utilisées pour indiquer une fenêtre de sous-trames, les premières informations comprennent au moins l'un parmi : des indices de sous-trame d'une pluralité de sous-trames dans la fenêtre de sous-trames indiquée par le dispositif de réseau, un indice de sous-trame d'une sous-trame de début et un indice de sous-trame d'une sous-trame de fin dans la fenêtre de sous-trames, et un indice de sous-trame d'une sous-trame de début dans la fenêtre de sous-trames et des informations d'étendue de sous-trame ; et les informations d'étendue de sous-trame sont utilisées pour indiquer une quantité des sous-trames indiquées par les premières informations.

4. Procédé selon la revendication 3, dans lequel, si les premières informations comprennent les indices de sous-trame de la pluralité de sous-trames, la pluralité de sous-trames sont des sous-trames consécutives ou des sous-trames non consécutives.

5. Procédé selon l'une quelconque des revendications 1 à 4, dans lequel les premières informations sont transportées dans des informations de commande de liaison descendante d'un canal de commande de liaison descendante physique.

6. Procédé de transmission d'informations d'accusé de réception de demande de répétition automatique hybride, HARQ, comprenant :
la réception (S201), par un équipement utilisateur, de premières informations envoyées par un dispositif de réseau, dans lequel les premières informations sont des informations utilisées pour indiquer une sous-trame utilisée par l'équipement utilisateur pour envoyer des informations d'accusé de réception HARQ au dispositif de réseau sur une porteuse sans licence ; et
l'envoi (S203), par l'équipement utilisateur, des informations d'accusé de réception HARQ au dispositif de réseau dans la sous-trame indiquée par les premières informations ;
après l'envoi, par l'équipement utilisateur, dans la sous-trame indiquée par les premières informations, des informations d'accusé de réception HARQ, le procédé comprend en outre :
en cas de non-envoi des informations d'accusé de réception HARQ dans la sous-trame indiquée par les premières informations, l'envoi, par l'équipement utilisateur, d'un message de notification au dispositif de réseau, dans lequel le message de notification est utilisé pour donner l'instruction au dispositif de réseau de recevoir les informations d'accusé de réception HARQ sur une autre porteuse sans licence ou de recevoir les informations d'accusé de réception HARQ sur une porteuse avec licence ; ou
en cas de non-envoi des informations d'accusé de réception HARQ dans la sous-trame indiquée par les premières informations, la réception, par l'équipement utilisateur, d'un message de notification provenant du dispositif de réseau, dans lequel le message de notification est utilisé pour donner l'instruction à l'équipement utilisateur d'envoyer les informations d'accusé de réception HARQ sur une autre porteuse sans licence.

7. Procédé selon la revendication 6, dans lequel les premières informations sont utilisées pour indiquer une sous-trame unique, et les premières informations comprennent un indice de sous-trame ou un décalage d'indice de sous-trame de la sous-trame unique indiquée, le décalage d'indice de sous-trame est utilisé pour indiquer un décalage de l'indice de sous-trame de la sous-trame unique par rapport à un indice de sous-trame d'une sous-trame dans laquelle le dispositif de réseau envoie des données de liaison descendante à l'équipement utilisateur, et les données de liaison descendante sont des données de liaison descendante correspondant aux informations d'accusé de réception HARQ.

8. Procédé selon la revendication 6, dans lequel les premières informations sont utilisées pour indiquer une fenêtre de sous-trames, les premières informations comprennent au moins l'un parmi : des indices de sous-trame d'une pluralité de sous-trames dans la fenêtre de sous-trames indiquée par le dispositif de réseau, un indice de sous-trame d'une sous-trame de début et un indice de sous-trame d'une sous-trame de fin dans la fenêtre de sous-trames, et un indice de sous-trame d'une sous-trame de début dans la fenêtre de sous-trames et des informations d'étendue de sous-trame ; et les informations d'étendue de sous-trame sont utilisées pour indiquer une quantité des sous-trames indiquées par les premières informations.

9. Procédé selon la revendication 8, dans lequel, si les premières informations comprennent les indices de sous-trame de la pluralité de sous-trames, la pluralité de sous-trames sont des sous-trames consécutives ou des sous-trames non consécutives.

10. Procédé selon l'une quelconque des revendications 6 à 9, dans lequel les premières informations sont transportées dans des informations de commande de liaison descendante d'un canal de commande de liaison descendante physique.

11. Procédé selon l'une quelconque des revendications 6 à 10, dans lequel
après la réception, par un équipement utilisateur, de premières informations envoyées par un dispositif de réseau, le procédé comprend en outre :
la préemption, par l'équipement utilisateur, d'un canal sur la porteuse sans licence ; et
l'envoi, par l'équipement utilisateur, des informations d'accusé de réception HARQ au dispositif de réseau dans la sous-trame indiquée par les premières informations comprend :
si l'équipement utilisateur réussit à préempter un canal sur la porteuse sans licence, l'envoi, par l'équipement utilisateur, des informations d'accusé de réception HARQ au dispositif de réseau dans la sous-trame indiquée par les premières informations.

12. Procédé selon la revendication 11, le procédé comprenant en outre :
si l'équipement utilisateur échoue à préempter un canal sur la porteuse sans licence, l'envoi, par l'équipement utilisateur, des informations d'accusé de réception HARQ au dispositif de réseau sur une autre porteuse sans licence ou une porteuse avec licence conforme au message de notification.
